# EUROPEAN PATENT APPLICATION

(11) **EP 1 764 004 A1**
(43) Date of publication of application: **21.03.2007**
(21) Application number: 06017421.6
(22) Date of filing: 22.08.2006
(51) Int. Cl.: A23L 1/236

(54) **Mixture of fructose-containing sweeteners with ternary of quaternary high-intensity sweetener blends**

(30) Priority: 29.08.2005 US 214363
(71) Applicant: Nutrinova Nutrition Specialties & Food Ingredients GmbH, 65926 Frankfurt am Main (DE)
(72) Inventor: Rahtjen, Susanne, Dr., 64287 Darmstadt (DE); Schwarz, Susanne, 60318 Frankfurt (DE)

(57) **Abstract**

This invention relates to reduced-calorie sweetener compositions used to produce foodstuffs that advantageously exhibit a sweetness and taste profile comparable to sugar. The sweetener compositions advantageously include at least one fructose-containing sweetener along with an effective amount of a high intensity sweetener composition. The high intensity sweetener composition includes acesulfame K, aspartame, sucralose and optionally cyclamate. Foodstuffs formed using the reduced-calorie sweetener compositions of the invention exhibit a calorie reduction of 50 % or more.

## Description

### FIELD OF THE INVENTION

The present invention relates to sweetener compositions. More particularly, the present invention relates to sweetener compositions used to produce reduced calorie beverages advantageously having a sweetness and taste profile comparable to beverages incorporating sucrose alone.

### BACKGROUND OF THE INVENTION

Carbohydrates have historically been used to impart sweetness to a variety of foodstuffs, such as beverages and the like. Unfortunately, carbohydrate sweeteners are highly caloric. Conventional carbohydrate sweeteners include sucrose, derived from sugar cane or sugar beets, and fructose sweeteners, such as high fructose corn syrups ("HFCSs").

HFCSs are common liquid sweeteners formed from isomerized (corn) syrups derived from the isomerization of glucose in the syrup to fructose by the enzyme isomerase. HFCSs are typically available as either HFCS 42, containing 42 % fructose (along with other sugars), or HFCS 55, containing 55 % fructose (along with other sugars). The taste profiles of these two HFCSs differ from each other. The taste profiles of both of these HFCSs differ from sucrose, as well. Nevertheless, HFCSs are commonly incorporated into a wide variety of foods and beverages instead of sugar, primarily for cost reasons. It is well known, however, that HFCS's do not achieve the superior taste quality of sugar.

In contrast to carbohydrate sweeteners, high intensity sweeteners are synthetic or natural substances which have either no calories or minimal, e.g. virtually no, calories. As the name suggests, high intensity sweeteners exhibit a sweetness potency several times higher than sugar. High intensity sweeteners are used in food and beverages to achieve a sweet taste without adding substantial calories to the products. High intensity sweeteners commonly used include acesulfame K, alitame, aspartame, cyclamate, lo han go, neohesperidine dihydrochalcone, neotame, saccharin, stevioside, thaumatin, and sucralose.

The ongoing debate on obesity in developed countries and the growing health consciousness of consumers has lead to an increasing demand for reduced calorie foodstuffs that exhibit a taste profile similar to beverages sweetened with sugar. More specifically, there is a demand for foodstuffs that have more than a 50 % reduction in calories compared to products fully sweetened with carbohydrates and that further exhibit an overall taste profile similar to the sweetness standard of sugar.

However, no high-intensity sweetener alone matches the taste profile of sugar completely. They differ in characteristics such as sweetness profile, side taste and off-taste characteristics. Proper blending of different high intensity sweeteners is known to overcome part of the taste limitations of single high-intensity sweeteners, however, even mixtures of high intensity sweeteners can not match the overall taste sensation of sugar. In particular, even if a more sugar-like sweetness profile is achieved in products with high-intensity sweeteners only, they still can be distinguished sensorically from their counterparts containing just sugar by lack of mouthfeel and reduced flavor characteristics.

Fry ("Sugar Replacement in Non-diet Soft Drinks," Food Technology International Europe, 83-86, 1995) describes a 30 and 50 % calorie reduction in cola and lemonades using combinations of either (a) glucose syrup and aspartame or (b) low-fructose syrups and aspartame. Using a consumer panel it was shown that none of these sweetening systems exhibit a taste profile similar to sucrose. The glucose syrup/aspartame and low-fructose syrup/aspartame mixtures showed statistically significant differences in sweetness, acidity, sweet aftertaste, bitter aftertaste, length of aftertaste, liking for aftertaste, mouthfeel, odour liking, flavour liking and overall liking.

Simon (Simon et al., "Combinations of Glucose Syrups and Intense Sweeteners, Application in Calorie Reduced Soft Drinks." in 'FIE. Food ingredients Europe. Conference proceedings, Paris 27, 28, 29 September 1989'. Maarssen, Netherlands; Expoconsult Publishers, 330 - 333, 1989) recommends using 3 % glucose syrup and different combinations of high-intensity sweeteners, which are calculated from a computer model. Simon does not give any sensory description of the resulting taste profiles compared to sugar.

Lotz and Meyer (Lotz, A., Meyer, E., "Sweeteners in Beverages - New Developments," Food Marketing & Technology, 4 - 9,1994.) recommend recipes using sugar and sweetener blends, stating that these combinations create a "nicely balanced sweetness." Lotz and Meyer similarly do not provide any sensory results compared to sugar, however.

Meyer (Meyer, H: Keep It Sweet - The Role of Aspartame in Developing Healthy and Nutritionally Balanced Foods and Drinks, Agrofood Industry, 25 - 27, 2003) indicates that no significant difference could be observed by consumers testing a sugar sweetened cola versus a product sweetened with 60% sugar and 40% aspartame in a triangle test. Meyer did not investigate the use of HFCS blends in comparison to sugar, however.

Published United States Application Publication No. US-2005-0013916 ("US 916") discloses blends of HFCS with acesulfame K and either aspartame or sucralose to produce a taste profile comparable to HFCS 55 alone.

Published United States Application Publication No. US-2005-0037121 ("US 121 ") discloses mixtures of HFCS with two component blends of high intensity sweeteners. US 121 does not disclose the advantagous use of ternary or quaternary high intensity sweetner blends in matching the taste profile of sugar, however. As known in the art, the effect of an additional taste component on the taste profile of the resulting foodstuff is altogether unpredictable, to say the least. Furthermore, US 121 does not disclose foodstuffs providing an up to an 80% reduction in calories compared to foodstuffs sweetened with sugar alone.

Accordingly, a need remains in the art for sweetener compositions that provide a further reduction in calories and whose resulting foodstuffs advantageously have a taste profile comparable to foodstuffs containing sucrose alone. There further remains a need in the art for sweetener compositions that provide reduced calories and whose resulting foodstuffs are both more economical and have a taste profile comparable to foodstuffs containing sucrose alone.

### SUMMARY OF ADVANTAGEOUS EMBODIMENTS

The present invention is directed to sweetener compositions used to produce foodstuffs exhibiting a taste profile comparable to foodstuffs sweetened with sucrose alone and that further advantageously provide a calorie reduction of up to 80%. For the sake of clarity, as used herein, the instant sweetener compositions may also be referred to as "reduced-calorie sweetener compositions," although it is understood that the calorie reduction is actually exhibited within the foodstuff incorporating the instant sweetener compositions.

The sweetener compositions of the present invention generally include (i) at least one fructose-containing sweetener and (ii) a high intensity sweetener ("HIS") composition formed from a mixture of acesulfame K, aspartame, sucralose and optionally cyclamate. Advantageously the fructose-containing sweetener is at least one of HFCS 42 or HFCS 55 and combinations thereof.

Neither HFCS 42 and/or HFCS 55 alone, nor blends of acesulfame K, aspartame, sucralose and optional cyclamate alone match the taste profile of sugar as such completely. Surprisingly, it was observed that foodstuffs containing (i) at least one fructose-containing sweetener, for example HFCS 42 and/or HFCS 55 , along with (ii) a high intensity sweetener composition formed from acesulfame K, aspartame, sucralose and optional cyclamate have an overall improved taste profile. In advantageous embodiments of the invention, the taste profile of the resulting foodstuff is not significantly different from foodstuffs sweetened with sucrose alone. The sweetener compositions of the invention further provide a significant caloric reduction. The instant sweetener compositions can advantageously provide up to an 80% calorie reduction within the resulting foodstuffs, for example.

### BRIEF DESCRIPTION OF THE DRAWINGS

Figure 1 is a sensory profile of beverages containing two comparative sweetener compositions; and
Figure 2 is a sensory profile of further beverages containing comparative sweetener compositions.

### DETAILED DESCRIPTION OF THE INVENTION

The instant reduced-calorie sweetener compositions generally include at least one fructose-containing sweetener and a high intensity sweetener composition formed from a mixture of acesulfame K, aspartame, sucralose and optionally cyclamate.

For the sake of clarity, sweetener compositions incorporating acesulfame K, aspartame and sucralose alone within their HIS composition may be referred to hereinafter as "ternary blend sweeteners" or "ternary blend embodiments" or the like, although it is understood that the sweetener composition as a whole actually contains more than three components. Similarly, for the sake of clarity, sweetener compositions further incorporating cyclamate within their HIS composition may be referred to hereinafter as "quaternary blend sweeteners" or "quaternary blend embodiments" or the like. Unless specifically stated otherwise, however, discussions hereinafter directed to the instant sweetener compositions are intended to include both the ternary blend sweeteners and the quaternary blend sweeteners.

Exemplary fructose-containing sweeteners that may be included within the instant reduced-calorie sweetener compositions include any sweetener or sweetener blend that includes fructose as a component thereof, such as HFCS 42, HFCS 55 and mixtures thereof.

HFCSs typically contain about 70 to 77 weight percent solids, the rest being water. The solids in HFCS 42 generally include 42 % fructose and 58 % glucose and/or glucose-oligomers such as maltose, maltotriose, and the like. The solids in HFCS 55 generally include 55 % fructose and 45 % glucose and/or glucose-oligomers such as maltose, maltotriose, and the like. For example, HFCS 55 might contain 55% fructose, 41% dextrose, 2% maltose and 2% higher saccharides. The term "HFCS" as used herein includes isomerised syrups derived not only from corn, but also from other starch sources such as wheat, barley, oat, potato or tapioca. In fact, "HFCS" as used herein generally includes any solution containing fructose and glucose in weight ratios of from about 40 : 60 to 60 : 40, bearing in mind that minor amounts (e.g. up to 6% dry matter) of oligo-saccharides may also be present. HFCS 42 and HFCS 55 are commercially available from numerous sources, including Cargill Foods, USA.

At least one fructose-containing sweetener is included within the reduced-calorie sweetener compositions. The fructose-containing sweetener can also be a mixture, however, particularly a mixture of HFCS 42 and HFCS 55, or a mixture of HFCS and one or more additional carbohydrate sweeteners. In particularly advantageous mixed - HFCS embodiments, the HFCS 42 and HFCS 55 may be present within the fructose-containing sweetener within exemplary weight ratios of 20 : 80 to 80 : 20. In especially beneficial aspects of such embodiments, the fructose-containing sweetener is a mixture of substantially equal amounts of HFCS 42 and HFCS 55, i.e. the HFCS 42 and HFCS 55 are present in approximately a 50: 50 weight ratio.

The fructose-containing sweetener may advantageously be present within the reduced-calorie sweetener composition in any effective amount. For example, the fructose-containing sweetener may advantageously be present within the sweetener compositions in non-limiting exemplary weight ratios ranging from about 50 : 1 to 400 : 1, such as from about 400 : 7 to 400 : 1, in particular from about 200 : 3 to 800 : 3, and more particularly from 250 : 3 to 700 : 3, based in each case on the weight of fructose-containing sweetener solids compared to the weight of the high intensity sweetener composition. Stated differently, the sweetener compositions may advantageously include fructose-containing sweeteners in amounts ranging from about 98.0 to 99.75 weight percent, based on the weight of the sweetener composition ("bowsc") such as from about 98.28 to 99.75 weight percent, bowsc, in particular from about 99.50 to 99.63 weight percent, bowsc, or from about 98.8 to 99.57 weight percent, bowsc.

As noted above, the instant reduced-calorie sweetener compositions further include a high intensity sweetener composition.

In the ternary blend sweeteners, the high intensity sweetener composition is a mixture of acesulfame K, aspartame and sucralose. Acesulfame K, also referred to as acesulfame potassium, is commercially available as SUNNETT® sweetener from Nutrinova Nutrition Specialties & Food Ingredients, GmbH, Germany. Aspartame is commercially available from numerous sources, including the Nutrasweet Company, USA (as NUTRASWEET^{®} artificial sweetener). Sucralose is commercially available as SPLENDA^{®} artificial sweetener from McNeil Nutritionals, USA.

The ternary blend embodiments may contain a wide range of acesulfame K to sucralose to asparatame weight ratios. Non-limiting exemplary ternary blend weight ratios for acesulfame K to sucralose to aspartame within the HIS composition include 60/5/35 to 5/90/5 (acesulfame K : sucralose : aspartame, weight to weight to weight ratio, "w/w/w") and 50/10/35 to 10/80/10 w/w/w.

In the quaternary blend sweeteners, the high intensity sweetener composition is a mixture of acesulfame K, sucralose, aspartame and cyclamate. Cyclamate is a term used in the trade to refer to either sodium cyclohexylsulfamate or calcium cyclohexylsulfamate. Cyclamate is commercially available from Zhong Hua Fang Da (H.K.), Ltd.

The quaternary blend embodiments may contain a wide range of acesulfame K to sucralose to aspartame to cyclamate weight ratios. Non-limiting exemplary weight ratios for acesulfame K to sucralose to aspartame to cyclamate within the HIS composition are 10/3/10/77 to 30/20/30/20 (acesulfame K: sucralose: aspartame: cyclamate, weight to weight to weight to weight ratio, ("w/w/w/w") and 15/3/15/67 to 30/15/30/25 (w/w/w/w).

The high intensity sweetener composition may be present within either the ternary or quaternary blend sweetener compositions in any effective amount. The HIS composition is advantageously present within the ternary or quaternary compositions in non-limiting exemplary amounts ranging from about 0.25 to 2.0 weight percent (bowsc), such as amounts ranging from about 0.25 to 1.72 weight percent (bowsc), more specifically from about 0.37 to 0.50 weight percent (bowsc), or from about 0.43 to 1.20 weight percent (bowsc).

In alternative embodiments, the various HIS compositions described above may advantageously be combined with carbohydrate sweeteners other than fructose-containing sweeteners. In further altenative embodiments, the HIS compostions described above may be used alone in foodstuffs.

In addition to the fructose-containing sweetener and the HIS composition, the reduced-calorie sweetener compositions may also contain minor amounts of commonly used additives such as flavors, bulking agents, weighting agents and the like. Such commonly used additives may be present in non-limiting exemplary amounts of up to about 10 weight percent, based on the weight of the foodstuff ("bowf"), such as up to 5 about weight precent (bowf).

The reduced-calorie sweetener compositions of the invention may be incorporated into any foodstuff, including beverages, dairy products, desserts, chewing gums, and the like. Reduced-calorie sweetener compositions in accordance with the invention advantageously result in significantly more than a 50 % calorie reduction in comparison to sugar sweetened foodstuffs. In particularly advantageous embodiments, reduced-calarie sweetener compositions in accordance with the invention provide up to an 80% calorie reduction in comparison to sugar sweetened foodstuffs.

In particularly beneficial embodiments, the reduced-calorie sweetener compositions are included within beverages. Exemplary beverages include all alcoholic beverages and non-alcoholic beverages, either carbonated or non-carbonated, in concentrated form or ready-to drink. Beverages in accordance with the invention may be water based, fruit-juice based, milk- or milk-derivative based. In advantageous embodiments of the invention, the beverages are water based and/or fruit juice based. In especially beneficial aspects of the invention, the beverages are non-alcoholic beverages (water based and/or fruit-juice based), either carbonated or non carbonated, in concentrated form or ready-to-drink.

The reduced-calorie sweetener compositions may be present within the foodstuff in any effective amount.

The sweetener compositions can be advantageously present within the foodstuff in non-limiting exemplary amounts ranging from about 2.0 to 5.0 weight percent, based on the weight of the foodstuff (bowf), such as from about 2.0 to 4.0 weight percent (bowf) and more particularly from about 2.5 to 3.5 weight percent (bowf). The HIS compositions of the invention may thus be present in the foodstuff in exemplary amounts ranging from about 0.01 to 0.04 weight percent, (bowf) such as from about 0.012 to 0.035 weight percent (bowf), and particularly from about 0.013 to 0.03 weight percent (bowf). This use of more limited amounts of the instant sweetener compositions is in sharp contrast to conventional sweeteners, which are typically included in beverages in amounts of about 10.0 weight percent (bowf).

Considered differently, an exemplary conventional carbohydrate sweetened beverage may contain about 100 g of carbohydrate sweeteners per 1000 ml of beverage. In contrast, exemplary 1000 ml beverages incorporating the instant sweetener compositions would typically include from about 20.00 to 50.00 g of the instant sweetener compositions to achieve a taste comparable to that of conventionally sweetened beverages with 100 g of carbohydrate sweetener alone.

Conventional beverages may, of course, contain substantially more or less than the 10 wt % carbohydrate sweetener noted above. The appropriate amount of the instant ternary or quaternary sweetener compositions used to provide a particular level of sweetness would thus vary. Generally, the appropriate amount of the ternary or quaternary sweetener compositions needed to provide a taste profile within a beverage that is comparable to the taste profile of a beverage sweetened with sucrose alone would be expected to vary proportionally, based on the ranges provided in conjunction with the exemplary 10 wt% carbohydrate sweetened 1000 ml beverage discussed above. For example, an exemplary 1000 ml beverage would typically include from about 40 to 100 g of the ternary or quaternary sweetener composition to achieve a taste comparable to that of 1000 ml beverages containing 200 g of carbohydrate sweetener alone.

Accordingly, the sweetener compositions of the invention result in foodstuffs that typically contain only about 20 to 50 % of the calories of comparable foodstuffs including carbohydrate sweeteners alone; such as foodstuffs containing from about 20 to 40% of the calories of comparable foodstuffs including carbohydrate sweeteners alone; and particularly foodstuffs containing from about 25 to 35% of the calories of comparable foodstuffs including carbohydrate sweetener alone. In addition, foodstuffs incorporating the instant ternary or quatenary sweetener compositions advantageously exhibit a taste profile comparable to, i.e. statistically indistinguishable from, foodstuffs sweetened with sucrose alone.

Reduced-calorie sweetener compositions in accordance with the invention are formed by simply mixing the fructose-containing sweetener and the high intensity sweetener composition together. The mixing process employed may be any suitable mixing technique known in the food industry. The reduced-calorie sweetener compositions may then be incorporated directly into foodstuffs, using techniques known in the art. In alternative embodiments, one or more of the components of the ternary or quaternary sweetener compositions may be added individually to the foodstuffs or as any of a number of pre-blended mixtures.

The invention is further illustrated by the following non-limiting examples.

### EXAMPLES

### Testing Methodology for Reduced-Calorie Sweetener Compositions

A sensory analysis was carried out for soft drinks made with HFCS 42 or HFCS 50 in comparison to soft drinks incorporating sucrose. All sweetening systems employed were sensorically adjusted to 10 % (weight) sucrose equivalence. A sensory panel of experts, especially trained to evaluate sweet products, from an independent, experienced sensorial-testing institute established the beverage flavor-specific attributes for the quantitative descriptive analysis. Quantitative assessments were undertaken by each of 12 panelists in individual tasting booths using a 0-100 scale. The order of presentation of samples was balanced across the panelists. Each panelist completed 3 replicates of these quantitative rating assessments.

Triangle tests were also carried out with selected sweetening systems. All sweetening systems employed in the triangle tests were sensorically adjusted to 10 % (weight) sucrose equivalence. A sensory panel of 22 panelists, trained according to DIN/ISO 10961, and especially trained to evaluate sweet products, carried out the triangle tests. Triangle tests are a sensory method to get a statistically quantified result as to whether two products differ from each other or not, i.e. whether differences described by the trained panelists can be detected by consumers. A standard protocol to carry out triangle tests is described in DIN/ISO 4120 e.g.

### Comparative Example 1: Beverage containing 10.15 wt % (bowf) HFCS 42 in comparison to a beverage containing 10 wt % (bowf) sucrose

The sensory profile of a 10.15 weight percent (bowf) HFCS 42 sweetened lemon-lime product was compared to a product sweetened with 10 weight percent (bowf) sucrose. The beverage system that was used as a basis for the product was 0.65 g/l of commercially available lemon-lime flavor (Sensient 1013981, commercially available from Sensient Flavours and Fragrances, USA), 2.5 g/I citric acid monohydrate, 0.15 g/I sodium benzoate and 6.3 g/I CO₂, and water added to one liter.

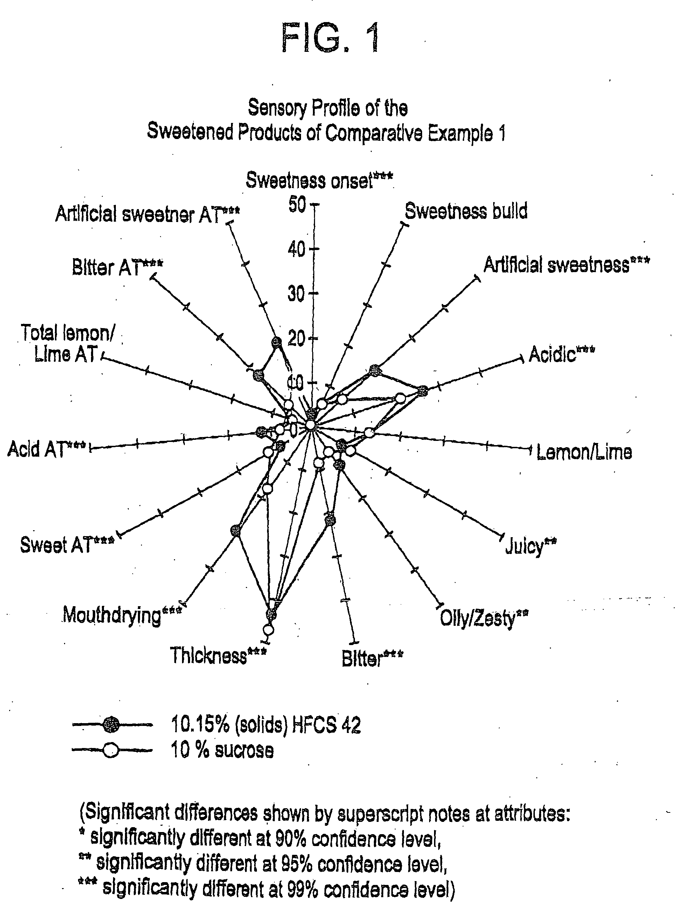

The results of the 15 attribute taste profile comparison are shown in the spider diagram in Figure 1. Spider diagrams, such as the diagram illustrated in Figure 1, are multi- parameter graphs. Spider diagrams are particularly useful in describing the overall taste and sweetness profile of food products. Spider diagrams allow the numerous attributes of a given food product, e.g. its acidity or sweet after taste ("AT"), to be illustrated within a single diagram. The intensity of each of these attributes is illustrated as well. The spider diagrams provided herein are the result of a multi test person sensory panel trial, as noted above.

The size of the plotted polygon, i.e. the integral area within the interior of the polygon, does not necessarily have any particular meaning per se. However, the shape of the polygon, i.e. the respective integral area, characterizes the taste profile as such. Thus, the more the polygon of two different types of food products, e.g. two different beverages, show a similar shape or form, the more likely the taste profiles can be described as being not significantly different from each other.

Consequently, as shown in Figure 1, statistically significant sensory differences exist between lemon-lime carbonated beverages sweetened with 10.15 weight percent (bowf) HFCS 42 versus 10 weight percent (bowf) sucrose. More particularly, the taste profiles for these two beverages are shown to differ at a 99% confidence level for sweetness onset, artificial sweetness, acidic taste, bitterness, thickness, mouthdrying, sweet after taste ("AT"), acid AT, bitter AT, and artificial sweetener AT.

### Comparative Example 2: Beverage containing 10.15 wt % (bowf) HFCS 55 in comparison to a beverage containing 10 wt % (bowf) sucrose

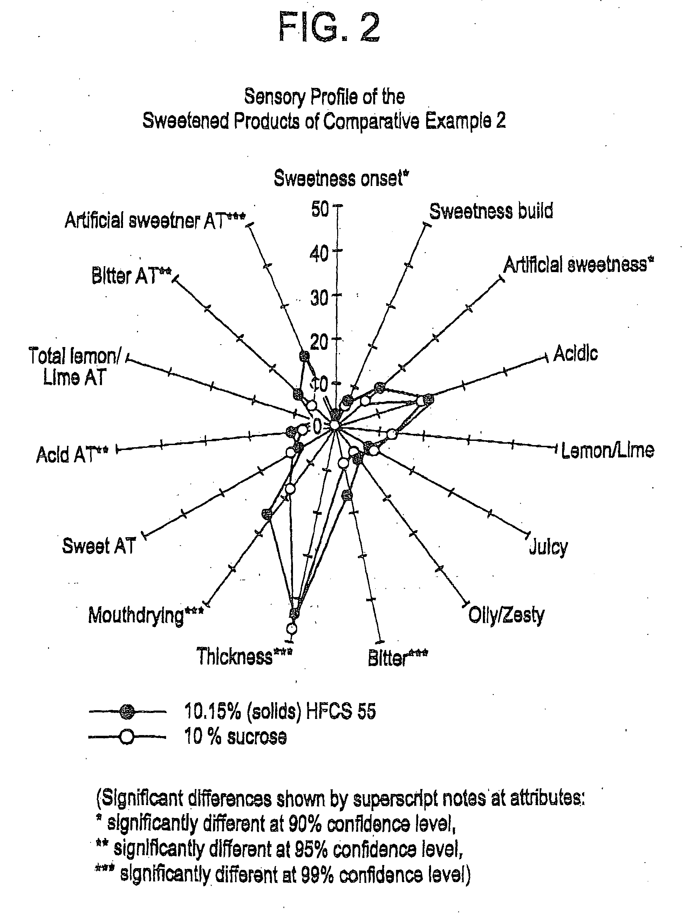

The sensory profile of a 10.15 weight percent (bowf) HFCS 55 sweetened lemon-lime product was compared to a product sweetened with 10 weight percent (bowf) sucrose. The products were based on the beverage system described in Comparative Example 1. The results are shown in Figure 2.

As shown in Figure 2, statistically significant sensory differences between the two products were observed. In specific, the beverages were significantly different at a 99% confidence level for bitterness, thickness, mouthdrying, artificial sweetener AT.

### Example 1: Beverage containinq 10 wt % (bowf) sucrose in comparison to a beverage containing 3 wt % (bowf) HFCS 55 and an acesulfame K/sucrose/ aspartame blend

The taste profile of a 10 wt.-% (bowf) sucrose sweetened product was compared to a product sweetened with a sweetener composition formed from (a) 38.96 g/I HFCS 55 syrup (equivalent to 30 g/I HFCS 55 solids) and (b) a high intensity sweetener composition formed from the combination of 0.075 g/I acesulfame K, 0.040 g/I sucralose and 0.030 g/l aspartame. The products were based on the beverage system described in Comparative Example 1.

The beverages were tested in a sensory panel. The triangle test was carried out by 22 members of a sensory panel, trained according to DIN/ISO 10961 norm. The results indicate that no significant differences in the test beverages could be detected by consumers. For illustrative purposes the scores are shown in Table 1:

**Table 1: Results of a triangle test according to DIN/ISO 4120 of 10% wt sucrose vs. 3% HFCS 55 + Acesulfame K/Sucralose/Aspartame Blend**

| **Test 1** | | 10% wt sucrose vs. 3% HFCS 55 + Acesulfame K/Sucralose/Aspartame |
|---|---|---|
| Σ of panelists who participated in the test | | 22 |
| Σ of correct answers | | 7 |
| Level of significance | | 0.6380 |
| Statistical certainty | | 36.2% |
| Confidence level: | 95% | no |
| | 99% | no |
| | 99.9% | no |

### Example 2: Beverage containing 10 wt% (bowf) sucrose in comparison to a beverage containing 2.5 wt% (bowf) HFCS 55 and an acesulfame K/sucralose/aspartame blend

The taste profiles of a 10 wt.% (bowf) sucrose sweetened product was compared to a product sweetened with a reduced-calorie sweetener composition formed from (a) 32.47 g/l HFCS 55 syrup (equivalent to 25 g/I HFCS 55 solids) and (b) a high intensity sweetener composition formed from the combination of 0.077 g/I acesulfame K, 0.039 g/l sucralose and 0.051 g/l aspartame. The products were based on the beverage system described in Comparative Example 1.

The beverages were tested in a sensory panel. The triangle test was carried out by 22 members of a sensory panel, trained according to DIN/ISO 10961 norm. The results indicate that no significant differences between the test beverages could be detected by consumers. For illustrative purposes the scores are shown in Table 2:

**Table 2: Results of a triangle test according to DIN/ISO 4120 of 10% wt sucrose vs. 2,5% HFCS 55 + Acesulfame KISucralose/Aspartame Blend**

| **Test 2** | | 10% wt sucrose vs. 3% HFCS 55 + Acesulfame K/Sucralose/Aspartame |
|---|---|---|
| Σ of panellists who participated in the test | | 22 |
| Σ of correct answers | | 6 |
| Level of significance | | 0.7938 |
| Statistical certainty | | 20.6% |
| Confidence level: | 95% | no |
| | 99% | no |
| | 99.9% | no |

Additional advantages, features and modifications will readily occur to those skilled in the art. Therefore, the invention in its broader aspects is not limited to the specific details, and representative examples, shown and described herein. Accordingly, various modifications may be made without departing from the spirit or scope of the general inventive concept as defined by the appended claims and their equivalents.

As used herein and in the following claims, articles such as "the," "a," and "an" can connote the singular or plural.

All documents referred to herein are specifically incorporated herein by reference in their entireties.

## Claims

1. A sweetener composition comprising
(i) an effective amount of at least one fructose-containing sweetener; and
(ii) an effective amount of a high intensity sweetener composition comprising acesulfame K, aspartame and sucralose.

2. A sweetener composition according to Claim 1, wherein the fructose-containing sweetener is present within the sweetener composition in an amount ranging from about 98.0 to 99.75 weight percent, bowsc.

3. A sweetener composition according to Claim 1, wherein the high intensity sweetener composition is present in the sweetener composition in an amount ranging from about 0.25 to 2.0 weight percent, bowsc.

4. A sweetener composition according to Claim 1, wherein the high intensity sweetener composition comprises a the weight ratio of acesulfame K to aspartame to sucralose of about 60:5:35 to 5:90:5 (w:w:w).

5. A sweetener composition according to Claim 1, wherein the high intensity sweetener composition further comprises cyclamate.

6. A sweetener composition according to Claim 1, wherein the high intensity sweetener composition comprises a the weight ratio of acesulfame K to aspartame to sucralose to cyclamate of about 10:3:10:77 to 30:20:30:20 (w:w:w:w).

7. Foodstuff incorporating the sweetener composition according to Claim 1.

8. A foodstuff according to Claim 7, wherein the sweetener composition is present within the foodstuff in an amount ranging from about 2.0 to 5.0 weight percent, bowf.

9. A high intensity sweetener composition comprising acesulfame K, aspartame and sucralose, wherein the composition comprises a weight ratio of acesulfame K to aspartame to sucralose of about 60:5:35 to 5:90:5 (w:w:w).

10. A sweetener composition according to Claim 9, wherein the high intensity sweetener composition further comprises cyclamate.

11. A sweetener composition according to Claim 10, wherein the high intensity sweetener composition comprises a weight ratio of acesulfame K to aspartame to sucralose to cyclamate of about 10:3:10:77 to 30:20:30:20 (w:w:w:w).

12. Foodstuff incorporating the high intensity sweetener composition according to Claim 9.

13. Foodstuff incorporating the high intensity sweetener composition according to Claim 9, wherein said foodstuff comprises the high intensity sweetener composition in an amount ranging from about 0.005 to 0.10 weight percent, bowf.

14. Process for producing a reduced calorie foodstuff, which process comprises incorporating a sweetener composition into a foodstuff in an amount ranging from about 2.0 to 5.0 weight percent, bowf, said sweetener composition comprising
(i) at least one fructose-containing sweetener comprising at least one of either HFCS 42 or HFCS 55, said fructose-containing sweetener present within the sweetener composition in an amount ranging from about 98.0 to 99.75 weight percent, bowsc; and
(ii) a high intensity sweetener composition comprising acesulfame K, aspartame and sucralose, the high intensity sweetener composition present in the sweetener composition in an amount ranging from about 0.25 to 2.0 weight percent, bowsc, said foodstuff exhibiting a taste profile comparable to sucrose.

15. A process according to Claim 14, wherein the high intensity sweetener composition has a weight ratio of acesulfame K to aspartame to sucralose of about 60:5:35 to 5:90:5 (w:w:w).

16. A process according to Claim 14, wherein the high intensity sweetener composition further comprises cyclamate and the weight ratio of acesulfame K to aspartame to sucralose to cyclamate is about 10:3:10:77 to 30:20:30:20 (w:w:w:w).
